# EUROPÄISCHE PATENTSCHRIFT

(11) **EP 1 537 261 B1**
(45) Veröffentlichungstag und Bekanntmachung des Hinweises auf die Patenterteilung: **01.10.2008**
(21) Anmeldenummer: 03763499.5
(22) Anmeldetag: 04.07.2003
(51) Int. Cl.: D01F 2/00, C08L 1/02

(54) **VERFAHREN ZUR HERSTELLUNG CELLULOSISCHER FORMKORPER**
METHOD FOR THE PRODUCTION OF SHAPED CELLULOSE BODIES
PROCEDE DE FABRICATION DE CORPS MOULES CELLULOSIQUES

(30) Priorität: 12.07.2002 AT 10512002
(43) Veröffentlichungstag der Anmeldung: 08.06.2005
(73) Patentinhaber: LENZING AKTIENGESELLSCHAFT, 4860 Lenzing (AT)
(72) Erfinder: REDLINGER, Sigrid, A-4860 Lenzing (AT); REITER, Gerhard, A-4863 Seewalchen (AT); FIRGO, Heinrich, A-4840 Vöcklabruck (AT)
(74) Vertreter: Nemec, Harald
(86) Internationale Anmeldenummer: PCT/AT2003/000186
(87) Internationale Veröffentlichungsnummer: WO 2004/007818

(56) Entgegenhaltungen:
- WO-A-97/07266
- US-A- 5 900 479
- DATABASE WPI Section Ch, Week 200277 Derwent Publications Ltd., London, GB; Class A11, AN 2002-711120 XP002254752 & KR 2002 036 398 A (ELAND CO LTD) 16. Mai 2002 (2002-05-16)
- DATABASE WPI Section Ch, Week 200260 Derwent Publications Ltd., London, GB; Class A11, AN 2002-565009 XP002254753 & TW 464 700 A (SHR J) 21. November 2001 (2001-11-21)
- ROGOVINA S Z ET AL: "CHITOSAN-CELLULOSE FILMS FABRICATED FROM MIXTURES OF POLYSACCHARIDES IN N-METHYLMORPHOLINE N-OXIDE" FIBRE CHEMISTRY, Bd. 34, Nr. 1, 2002, XP002254751

## Beschreibung

Die Erfindung betrifft ein Verfahren zur Herstellung cellulosischer Formkörper nach dem Aminoxidverfahren.

Als Alternative zum Viskoseverfahren wurden in den letzten Jahren eine Reihe von Verfahren beschrieben, bei denen Cellulose ohne Bildung eines Derivats in einem organischen Lösungsmittel, einer Kombination eines organischen Lösungsmittels mit einem anorganischen Salz oder in wäßriger Salzlösung gelöst wird.

Bis heute hat sich jedoch nur ein einziges Verfahren zur Herstellung solcher Formkörper bis zur industriellen Realisierung durchgesetzt. Bei diesem Verfahren wird als Lösungsmittel ein tertiäres Aminoxid, insbesondere N-Methylmorpholin-N-oxid (NMMO), verwendet. Das Verfahren zur Herstellung von Formkörpern aus einer Lösung der Cellulose in einem wässerigen tertiären Aminoxid wird als "Aminoxidverfahren" oder "Lyocellverfahren" bezeichnet.

Die Lösung der Cellulose wird in diesem Verfahren üblicherweise mittels eines Formwerkzeuges extrudiert und dabei ausgeformt. Die ausgeformte Lösung gelangt über einen Luftspalt in ein Fällbad, wo durch Ausfällen der Lösung der Formkörper erhalten wird. Der Formkörper wird gewaschen und ggf. nach weiteren Behandlungsschritten getrocknet.

Cellulosefasern, die aus solchen Lösungen hergestellt werden, heißen "lösungsmittelgesponnene" Fasern und erhielten von der BISFA (The International Bureau for the Standardisation of Man Made Fibres) den Gattungsnamen Lyocell. Ein Verfahren zur Herstellung von Lyocellfasern ist z.B. in der US-A 4,246,221 beschrieben. Das Aminoxidverfahren liefert Fasern, die sich durch eine hohe Festigkeit, einen hohen Naßmodul und durch eine hohe Schlingenfestigkeit auszeichnen.

Chitin und Chitosan sind natürliche, biologisch abbaubare, nicht toxische, nicht allergene, bioaktive und biokompatible Polymere und in ihrer Struktur der Cellulose ähnlich. Chitin wird aus den Hüllen von Krustentieren gewonnen, einem Abfallprodukt der Krabben- und Shrimpsindustrie. Das weltweite Interesse bezüglich der Verwendungsmöglichkeiten von Chitin hat, da es neben Cellulose als zweitgrößte Ressourcenquelle für natürliche Polysaccharide gesehen wird, in den letzten Jahren enorm zugenommen.

Chitosan besteht aus Poly-(1,4)-2-Amino-2-Deoxy-Beta-D-Glucose und wird durch Deacetylierung von Chitin (Poly-(1,4)-2-Acetamid-2-Deoxy-Beta-D-Glucose) hergestellt. Aus Löslichkeitsgründen- Chitin ist unlöslich in Wasser, organischen Lösungsmitteln, verdünnten Säuren und Laugen - hat Chitosan, welches in verdünnten Säuren, wässrigem Methanol und Glycerin löslich ist, die weitaus größere Bedeutung.

Anwendungsgebiete für Chitin und Chitosan sind in der Biotechnologie zur Immobilisierung von Zellen und Enzymen, in der Medizin zur Wundbehandlung, im Lebensmittelbereich als Nahrungsmittelzusatz- und Konservierungsstoff, in der Landwirtschaft zur Samenkonservierung, in Abwassersystemen als Flockungsmittel und Chelatbildner mit Schwermetallen.

Allerdings muss für die meisten Anwendungsgebiete eine Modifizierung des Chitins/Chitosans durchgerührt werden, um die Löslichkeit in wässrigen Systemen zu verbessern.

Der Einsatz von Chitosan in der Textilindustrie gliedert sich in drei Anwendungsgebiete:
- Herstellung von 100 % Chitosanfasern bzw. Herstellung von "Man Made Fibres" mit Inkorporation von Chitosan
- Finishing und Coating von Textilfasern
- Prozesshilfsstoffe für die Textilindustrie

Chitosanfasern finden ihre Anwendung im medizinischen Bereich z.B. als Wundabdeckungen und chirurgische Nahtfäden aufgrund der antibakteriellen Eigenschaften und der Wachstumshemmung auf pathogene Keime. Chitin bzw. Chitosan können durch körpereigene Fermente enzymatisch bzw. hydrolytisch abgebaut werden und sind daher resorbierbare Fasern. Die Wirkung dieser Naturpolymere bei der Wundheilung besteht in der allmählichen Abgabe von N-Acetyl-Glukosamin, der mucopolysacchariden Organisation des Collagens sowie der positiven Beeinflussung des Gewebewachstums im Verlauf der Wundheilung.

Der Nachteil von Fasern aus 100 % Chitosan ist allerdings, dass sie eine geringe Trockenfestigkeit besitzen (Chitosanfasern der Fa. Innovative Technology Ltd., Winsford, England: Titer 0,25 tex; Faserfestigkeit konditioniert 9cN/tex, Faserdehnung konditioniert 12,4 %; Chitosanfasern der Fa. Korea Chitosan Co. LTD: Faserfestigkeit konditioniert 15 cN/tex; Faserdehnung konditioniert 26 %), ausgesprochen spröde sind und die Nassfestigkeit nur 30 % der Trockenfestigkeit beträgt. Daher werden entweder Chitosanfasern anderen Man-Made Fasern beigemischt bzw. bereits beim Herstellungsprozess von z.B. Viskosefasern Chitosan in die Spinnmasse beigegeben.

Kommerziell erhältlich sind Viskosefasern mit inkorporiertem Chitin/Chitosan (im folgenden: "chitosaninkorporierte Viskosefasern") z.B. unter dem Handelsnamen Crabyon (Fa. Omikenshi Co) und Chitopoly (Fa. Fuji Spinning Co). Hergestellt werden diese Fasern z.B., indem Chitosan oder acetyliertes Chitosan in Pulverform mit einer Korngröße kleiner 10µ in einer Menge von 0,5 bis 2 Gew. % in Wasser dispergiert wird und der Viskosespinnlösung zugegeben wird (US 5,320,903). Dann werden nach dem herkömmlichen Viskose- oder auch Polynosicverfahren Fasern hergestellt.

Weitere Herstellungsverfahren für chitosaninkorporierte Viskosefasern sind in der US-A 5,756,111 (aufwendige Vor- und Nachlöseprozesse bei Tieftemperatur, um alkalische Chitin-Chitosan Lösungen für die Zugabe zur Viskoselösung zu erhalten) und der US-A 5,622,666 (Zugabe von mikrokristallinem Chitosan und einem wasser- und/oder alkalilöslichen natürlichen Polymer, z.B. Natriumalginat, welches ionische Bindungen zum Chitosan bilden kann, als Dispersion zur Viskosespinnlösung) beschrieben.

Die chitosaninkorporierten Viskosefasern haben eine erhöhte Farbstoffaffinität, ein erhöhtes Wasserrückhaltevermögen, antifungizide und geruchshemmende Eigenschaften, allerdings auch die für Viskosefasern bekannte geringe Nassfestigkeit. Da Chitosan das Wachstum für die Haut schädlicher Bakterien verhindert und allergische Effekte eliminiert, sind z.B. Gewebe aus Chitopoly für Dermatitispatienten besonders geeignet.

Der Nachteil aller beschriebenen Verfahren besteht darin, daß die so erhaltenen Fasern feinste Chitosanpartikeln enthalten, da das Chitosan in der Spinnmasse nicht löslich ist.

Die Sekundäragglomeration des Chitosans in der Spinnmasse bzw. die inhomogene Verteilung führt zu einer Verschlechterung der Spinneigenschaften, das Spinnen von Fasern mit niedrigen Titern ist extrem schwierig. Aus diesem Grund kann auch die Menge an inkorporiertem Chitosan nicht erhöht werden, da damit sofort ein Verlust an textilen Daten eintritt bzw. es bereits beim Spinnen zu zahlreichen Fadenbrüchen kommt. Weiters kommt es, da Chitosan in Säuren löslich ist, im Spinnbad zu Chitosanverlusten. Zur Inkorporation von Chitosan sind zusätzliche aufwendige Schritte notwendig.

In der Folge wurde auch versucht, in lösungsmittelgesponnene Cellulosefasern, die nach dem Aminoxidverfahren hergestellt werden, Chitosan zu inkorporieren, insbesonders wegen der hohen Nass- und Trockenfestigkeit der Lyocellfasern.

In der DE 195 44 097 wird ein Verfahren zur Herstellung von Formkörpern aus Polysaccharidmischungen durch Auflösen von Cellulose und einem Zweitpolysaccharid in einem organischen, mit Wasser mischbaren Polysaccharidlösungsmittel (bevorzugt NMMO), das auch ein Zweitlösungsmittel enthalten kann, beschrieben.

Zur Lösungsbildung verwendet man Cellulose und/oder wenigstens ein wasserunlösliches Cellulosederivat und als Zweitpolysaccharid wenigstens ein von diesen durch erhöhte Wasserlöslichkeit verschiedenes Polysaccharid. Als Drittpolysaccharid kann man Chitin, Chitosan, N-oder O-hydroxyalkyliertes oder carboxyalkyliertes Chitin- oder Chitosanderivat einsetzen. In den Beispielen beschrieben ist die Herstellung von zwei Chitosaninkorporierten Cellulosefasern, wobei in jedem Fall zusätzlich zu NMMO ein Zweitlösungsmittel verwendet wird und carboxymethyliertes Chitosan zugesetzt wird. Beansprucht wird die Verwendung der Faser für Formkörper mit bakteriziden und fungiziden Eigenschaften, als Mittel für die Wasser-/ und Schwermetallbildung.

Weiters wird in der KR-A 9614022 die Herstellung von Chitin - Cellulose Fasern, genannt "Chitulose", beschrieben, indem Chitin und Cellulose in einem Lösungsmittel aus der Gruppe Dimethylimidazoline/LiCl, Dichloroacetat/Chlorkohlenwasserstoff, Dimethylacetamid/LiCl, N-methylpyrrolidone/LiCl gelöst werden und nach dem Nassspinnverfahren Garne hergestellt werden. In den Ansprüchen ist NMMO nicht erwähnt.

In der EP-A 0 883 645 wird u.a. die Zugabe von Chitosan zur Lösung als modifizierte Verbindung zur Erhöhung der Geschmeidigkeit von Nahrungsmittelhüllen beansprucht. Die modifizierenden Verbindungen müssen mit der Cellulose/NMMO/Wasser-Lösung mischbar sein.

In der DE-A 100 07 794 wird die Herstellung von Polymerzusammensetzungen beschrieben, umfassend ein biologisch abbaubares Polymer und ein Material aus Meerespflanzen und/oder Schalen von Meerestieren sowie die Herstellung von Formkörpern daraus. Beansprucht wird auch die Zugabe von Material aus Meerespflanzen, Meerestieren in Pulverform, Pulversuspension oder flüssiger Form zur nach dem Lyocellverfahren hergestellten Celluloselösung. Weiters kann das Material auch nach oder während der Zerkleinerung der trockenen Zellulose zugegeben werden, sowie in jeder Stufe des Herstellungsprozesses. Trotz Zugabe des Additives zeigen die Fasern dieselben textilmechanischen Eigenschaften wie ohne Additiv. In den Beispielen werden nur Lyocell-Fasern beschrieben, welche Braunalgenpulver inkorporiert haben, wobei zur Herstellung der Spinnmasse das Braunalgenmehl, NMMO und Zellstoff und Stabilisator gemischt und auf 94°C erwärmt werden.

Weiters wird im Schlussbericht "Erzeugnisse aus Polysaccharidverbunden" (Taeger, E.; Kramer, H.; Meister, F.; Vorwerg, W.; Radosta, S; TITK - Thüringisches Institut für Textil- und Kunststoff-Forschung, 1997, S.1-47, Report-Nr. FKZ 95/NR 036 F) beschrieben, dass Chitosan in verdünnten organischen oder anorganischen Säuren gelöst wird und danach in wässriger NMMO Lösung gefällt wird. Man erhält so eine Suspension feiner Chitosankristalle in der Celluloselösung, die dann versponnen wird. Gemäß diesem Dokument verbleibt das Chitosan auch nach dem Auflösen der Cellulose als feine Kriställchen in der Lösung. Dadurch kommt es zu einem mikroheterogenen Zweitphasensystem in der Faser. Die Festigkeit der Faser ist gering (bei 10 % Chitosan Faserfestigkeit konditioniert 19,4 c/N/tex, Faserdehnung konditioniert 11,5 %).

Herkömmliche kommerziell erhältliche Standardchitosan-Qualitäten sind in der Wasser/NMMO/Cellulose-Lösung nicht löslich, und nach den beschriebenen Verfahren erhält man Spinnmassen, bei welchen die Chitosanpartikel in der Celluloselösung als zweite Phase vorliegen. Außerdem quellen feinste Chitosanpartikel im Spinnmedium, was zu Spinnproblemen/Düsenverstopfungen führt.

Der vorliegenden Erfindung liegt nun die Aufgabe zugrunde, Verfahren zur Herstellung einer Lyocellfaser zur Verfügung zu stellen, welche Chitosan oder ein Chitosansalz in der Cellulosematrix inkorporiert und/oder an der Oberfläche der Faser aufweist und bei welchem die geschilderten Nachteile des Standes der Technik vermieden werden. Ein weiterer Aspekt der vorliegenden Erfindung betrifft solche Lyocellfasern.

Die Aufgabe der vorliegenden Erfindung wird durch ein Verfahren zur Herstellung cellulosischer Formkörper nach dem Aminoxidverfahren, umfassend die Schritte:
- Ausformen einer Lösung der Cellulose in einem wässerigen tertiären Aminoxid
- Ausfällen der ausgeformten Lösung
- Waschen des so erhaltenen Formkörpers und
- Trocknen des Formkörpers,
gelöst, welches dadurch gekennzeichnet ist, daß
der Lösung der Cellulose und/oder einem Vorläufer dieser Lösung ein Salz des Chitosans mit einer anorganischen und/oder organischen Säure zugegeben wird und/oder der Formkörper vor dem Trocknen mit einem Salz des Chitosans mit einer anorganischen und/oder organischen Säure behandelt wird, wobei das Chitosansalz in in einer Standardspinnlösung im wesentlichen vollständig löslich ist.

In der Literatur gibt es keine einheitliche Definition für die Abgrenzung zwischen Chitin und Chitosan.

Für die Zwecke der vorliegenden Erfindung soll der Begriff "Chitin" ein β-1,4-gebundenes Polymer der 2-acetamido-2-deoxy-D-glucose mit einem Deacetylierungsgrad von 0% bedeuten. Weiters bedeutet für die Zwecke der vorliegenden Erfindung der Begriff "Chitosan" ein zumindest teilweise deacetyliertes β-1,4-gebundenes Polymer der 2-acetamido-2-deoxy-D-glucose,

Im folgenden wird für den Begriff -"Salz des Chitosans mit einer anorganischen und/oder organischen Säure" stellvertretend auch der Begriff "Chitosoniumpolymer" verwendet.

Der Begriff "Polymer" umfaßt für die Zwecke der vorliegenden Erfindung auch niedermolekulare Oligomere der deacetylierten 2-acetamido-2-deoxy-D-glucose bzw. deren Salze ab einem durchschnittlichen Polymerisationsgrad von 2.

Als "Vorläufer" der Celluloselösung sind Ausgangs- bzw. Zwischenprodukte der Herstellung der Celluloselösung wie z.B. der eingesetzte Zellstoff, das tertiäre Aminoxid oder eine Suspension der Cellulose im wässerigen tertiären Aminoxid zu verstehen.

Unter "NMMO" ist das N-methyl-morpholin-N-oxid zu verstehen.

Als Standardspinnlösung wird eine Spinnlösung der Zusammensetzung 13 Gew.% Zellstoff, 77 Gew.% NMMO, 10 Gew. % Wasser und 0,1 Gew.% (bezogen auf die Gesamtlösung) eines üblichen Stabilisators verstanden, welche gemäß dem im Beispielsteil beschriebenen Verfahren hergestellt wird.

Unter dem Begriff "im wesentlichen vollständig löslich" wird verstanden, wenn in der Standardspinnlösung bei der im Beispielsteil beschriebenen mikroskopischen Beurteilung bei einem Gehalt von bis zu 10 Gew. % Chitosoniumpolymer bezogen auf Zellstoff im wesentlichen keine ungelösten Teilchen des Chitosoniumpolymers sichtbar sind. Für die Zwecke der vorliegenden Erfindung werden gelartige Teilchen des Chitosoniumpolymers als gelöste Teilchen angesehen.

Es hat sich überraschenderweise gezeigt, daß bestimmte Chitosoniumpolymere in der Lösung der Cellulose im tertiären Aminoxid löslich sind. Werden solche Chitosoniumpolymere der Celluloselösung oder einem Vorläufer davon zugegeben, so liegen sie in der NMMO/Wasser/Cellulose-Lösung in gleichmäßiger, unter dem Mikroskop nicht mehr von der Cellulosematrix differenzierbarer, homogener Verteilung vor.

Es ist bekannt, dass Chitosan mit vielen organischen und anorganischen Säuren wasserlösliche Chitosonium-Salze - in der Literatur auch Chitosoniumpolymere genannt - bildet, die durch z.B. Gefriertrocknung oder Sprühtrocknung in Pulverform isoliert werden. Die Herstellung und Anwendung dieser Chitosoniumpolymere ist literaturbekannt und in zahlreichen Patenten beschrieben. Weiters sind Chitosoniumpolymere kommerziell erhältlich.

Es hat sich gezeigt, daß als Chitosoniumpolymere insbesondere solche mit einem Deacetylierungsgrad von 10 bis 100%, bevorzugt von 50 bis 90% und mit einem Molekulargewicht von 1 bis 10000 kDa, bevorzugt 1 bis 1500 kDa geeignet sind.

Aus "Dry Chitosan Salts and Complexes of Aliphatic Carboxylic Acids", P.R. Austin und S. Sennett, Chitin inNature and Technology, edited by R. Muzzarelli, C. Jeuniaux; G.W. Gooday, Plenum Press New York, Seiten 279-286, ist bekannt, daß weiters Chitosoniumpolymere in einer Form vorliegen können, in welcher ein Überschuß an Säure als Solvat oder Komplex vorhanden ist. Es zeigt sich, daß Chitosoniumpolymere mit einem Salzgehalt von mehr als 0,4, bevorzugt von 0,5 bis 2,5 eine gute Löslichkeit in NMMO besitzen und daher besonders gut für das erfindungsgemäße Verfahren geeignet sind. Der Salzgehalt wird dabei als das Verhältnis von Mol Säure pro Mol Chitosan definiert.

Die Herstellung von Chitosoniumpolymeren wird weiters z.B. beschrieben in der US-A 4,929,722, der US-A 4,946,870 sowie der US-A 5,900,479.

Bevorzugt eingesetzt werden kommerziell erhältliche Chitosoniumpolymere, z.B. Chitosanacetate, Chitosanchloride, Chitosancitrat oder Chitosanlactat. Chitosoniumpolymere sind hautverträglich, wundheilungsfördernd und mild antibakteriell. Besonders bevorzugt ist der Einsatz eines Chitosanchlorides.

Chitosanacetatlösungen bilden, auf Brandwunden gesprüht, einen wundheilenden Schutzfilm (US-A 4,929,722).

Die Verwendung von Chitosoniumpolymeren als Faserbehandlungsmittel wird in der US 5,900,479, WO 00/49219 und WO 01/34897beschrieben.

Das Chitosoniumpolymer wird darin durch Erhöhung des pH-Wertes auf mindestens pH > 5,5, bevorzugt ph ≥ 6,6 wasserunlöslich gemacht, d.h. das kationisch geladene Chitosonium Salz wird wieder in das entsprechende Chitosan/Chitin überführt (WO 92/09636). Eine weitere Methode, um das Chitosoniumpolymer in das N-acyl-glucose-amin-Polymer umzuwandeln, ist eine milde Wärmbehandlung (100 -130°C), beschrieben in US 5,900,479.

Bevorzugt wird das Chitosoniumpolymer in einer Konzentration von 1 Gew.% bis 50 %, bevorzugt 1 Gew.% - 10 Gew.%, bezogen auf Cellulose, der Celluloselösung beigegeben. Das Chitosoniumpolymer kann in fester Form, z.B. als Pulver, oder in Form einer Lösung oder Suspension zugegeben werden.

Mikroskopaufnahmen (Durchlicht - Mikroskop Olympus BH-2, Aufnahme mit Polarisationsfilter in 100 und 400facher Vergrößerung) der mit Chitosoniumpolymer hergestellten Celluloselösung zeigen, dass das Chitosoniumpolymer in gleichmäßiger, nicht mehr von der Cellulosematrix differenzierbarer, homogener Verteilung vorliegt.

Aus der Lösung werden in an sich bekannter Weise Formkörper, wie z.B. Lyocell-Fasern hergestellt.

In einer weiteren bevorzugten Ausführungsform des erfindungsgemäßen Verfahrens wird der aus der Celluloselösung erhaltene Formkörper (z.B. die Fasern) vor dem Trocknen mit einer Lösung oder Suspension des Chitosoniumpolymers behandelt. Im Fall von Lyocell-Fasern spricht man in diesem Zusammenhang von niemals getrockneten (never-dried) Fasern.

Das Chitosoniumpolymer ist in der Behandlungslösung oder -suspension bevorzugt in einem Anteil von 0,1 Gew.% bis 10 Gew.%, bevorzugt von 0,5 Gew.% bis 3 Gew.% enthalten.

Der für die Herstellung von Formkörpern nach dem Aminoxidverfahren übliche pH-Wert des Spinnbades von ≥ 7 und die nachfolgende Trocknung der Formkörper reichen zwar aus, um das im Formkörper enthaltene bzw. das auf den Formkörper aufgebrachte Chitosoniumpolymer wieder in das entsprechende Chitosan überzuführen.

Um aber sicherzustellen, dass alle kationisch geladenen Gruppen wieder als Amingruppen vorliegen, kann am Formkörper, welche das Chitosoniumpolymer bzw. bereits daraus teilweise oder ganz regeneriertes Chitosan inkorporiert und/oder auf der Oberfläche enthält, eine Alkalibehandlung, bevorzugt mit 20 g/l Soda, mit nachfolgender Neutralwäsche durchgeführt werden. Diese Behandlung erfolgt vorzugsweise während der Herstellung am niemals getrockneten Formkörper, kann aber auch am getrockneten Formkörper im nachhinein erfolgen.

Weiters kann zu diesem Zweck anstelle der oder zusätzlich zur Alkalibehandlung eine Behandlung mit Heißdampf durchgeführt werden.

Zur kontinuierlichen Behandlung von niemals getrockneten Lyocell-Fasern werden bevorzugt die geschnittenen, NMMO frei gewaschenen Fasern mit einer z.B. durch Abpressen eingestellten definierten Feuchte von 50 % bis 500 % in einem losen Verband ("Vlies") auf einem bewegten Siebband mit einer Flotte, die das in Wasser gelöste Chitosoniumpolymer enthält, in Kontakt gebracht und z.B. durch Besprühen durchtränkt ("Imprägnierung"). Nach der Imprägnierung wird das Vlies auf eine definierte Feuchte von 50 % - 500 % abgepreßt, und die abgepresste Behandlungsflotte wird in den Imprägnierkreislauf zurückführt. Danach wird das Vlies zur Fixierung des Chitosoniumpolymers mit Alkali in Kontakt gebracht (z.B. durch Besprühen) und/oder mit Heißdampf behandelt und anschließend neutral gewaschen.

In einer weiteren bevorzugten Ausführungsform wird der Formkörper vor oder nach dem Trocknen einer Behandlung mit einem Vernetzungsmittel unterzogen. Wenn der Formkörper mit einer Lösung oder Suspension des Chitosoniumpolymers behandelt wurde, ist es vorteilhaft, die Behandlung mit dem Vernetzungsmittel nach der Behandlung mit dem Chitosoniumpolymer durchzuführen.

Bei der Behandlung der Faser mit einem Vernetzungsmittel im alkalischen Milieu kann eine zusätzliche Alkalibehandlung der Faser entfallen. Weiters ist es vorteilhaft, eine Behandlung mit Heißdampf nach beiden Behandlungen, also sowohl nach der Behandlung mit der Lösung oder Suspension des Chitosoniumpolymers als auch nach der Behandlung mit dem Vernetzungsmittel durchzuführen.

Geeignete Vernetzungsmittel sind z.B. in der WO 99/19555 beschrieben.

Die vorliegende Erfindung betrifft auch eine Lösung der Cellulose in einem tertiären Aminoxid, enthaltend ein Salz des Chitosans mit einer anorganischen und/oder organischen Säure, welches in einer Standardspinnlösung im wesentlichen vollständig löslich ist.

Aus erfindungsgemäßen Lösungen lassen sich in an sich bekannter Weise Formkörper herstellen, welche, wie oben erläutert, das Chitosoniumpolymer bzw. Chitosan enthalten und hervorragende Eigenschaften aufweisen.

Die vorliegende Erfindung betrifft demgemäß auch Formkörper, die durch das erfindungsgemäße Verfahren erhältlich sind, insbesondere in Form von Fasern.

Erfindungsgemäße Fasern weisen im Unterschied zum Stand der Technik (siehe insbesondere Schlußbericht FKZ 95 NR 036 F) trotz eines Chitosangehaltes von bis zu 10 Gew.% hervorragende textile Eigenschaften auf. Die Fasern zeigen ein ausgezeichnetes Spinnverhalten - auch die Herstellung von Fasern mit niedrigen Titern ist möglich - sowie die für Lyocell typischen hohen fasermechanischen Eigenschaften sowohl im trockenen wie im nassen Zustand und haben bereits ohne Avivage eine hohe Geschmeidigkeit (soft hand).

Weiters haben die Fasern ein erhöhtes Wasserrückhaltevermögen, erhöhte Feuchtigkeitsaufnahme, erhöhte Anfärbeverhalten sowie mild antimikrobielle und wundheilende, blutstillende Eigenschaften.

### BEISPIELE

### Herstellung einer Standardspinnlösung

Die Standardspinnlösung wird in an sich bekannter Weise aus einer Suspension hergestellt, welche Zellstoff, Stabilisator, NMMO (wässerige 60%-ige Lösung) sowie das jeweilige Additiv (Chitosoniumpolymer) enthält.

Die Lösungen werden in einem Kneter HKD-T 0,6 der Fa. IKA Labortechnik hergestellt, indem aus diesem Gemisch aus Zellstoff/Wasser/NMMO/Stabilisator sowie dem Additiv mittels Abdampfen der überschüssigen Wassermenge unter Vakuum die Lösung mit der gewünschten Zusammensetzung wie oben beschrieben bei einer Lösezeit von 60-70 Minuten und einer Lösetemperatur von 100-110°C erreicht wird.

Zunächst wird die Mischung aus NMMO, Wasser, Zellstoff, Stabilisator und dem Additiv eine Stunde bei Raumtemperatur und einem Absolutdruck von 250 mbar im Kneter geknetet (Imprägnierung).

Danach wird die Thermostat-Temperatur auf 130°C eingestellt. 5 Minuten nach Erreichen einer Temperatur der Mischung von 70°C wird der Absolutdruck alle weiteren 5 Minuten um 25 mbar gesenkt, bis 50 mbar erreicht sind. Nach ca. 60-70 min bei einer Temperatur der Mischung von 100-110°C ist die der Lösungszusammensetzung entsprechende Menge Wasser abdestilliert, das Vakuum wird entfernt und die Lösungsqualität wird beurteilt.

### Mikroskopische Beurteilung der Standardspinnlösung

Die Beurteilung der Qualität der Lösung erfolgt mit Hilfe eines Mikroskopes der Fa. Olympus, Typ BH-2, unter Verwendung eines Polarisationsfilters bei 100-facher Vergrößerung.

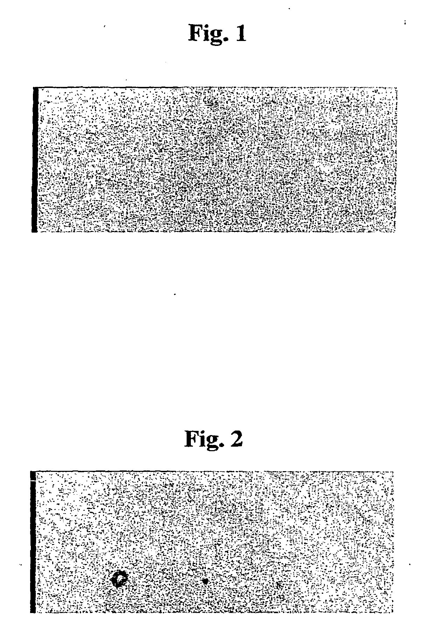

Figur 1 zeigt die Aufnahme einer Standardspinnlösung, welche kein Additiv enthält. Es sind keine ungelösten Teilchen erkennbar.
Figur 2 zeigt die Aufnahme einer Standardspinnlösung, welche 5 Gew.% (bezogen auf Zellstoff) eines Chitosoniumpolymers gemäß Beispiel 5 enthält. Auch bei dieser Aufnahme sind keine ungelösten Teilchen, sondern lediglich eingeschlossene Luftblasen sichtbar.

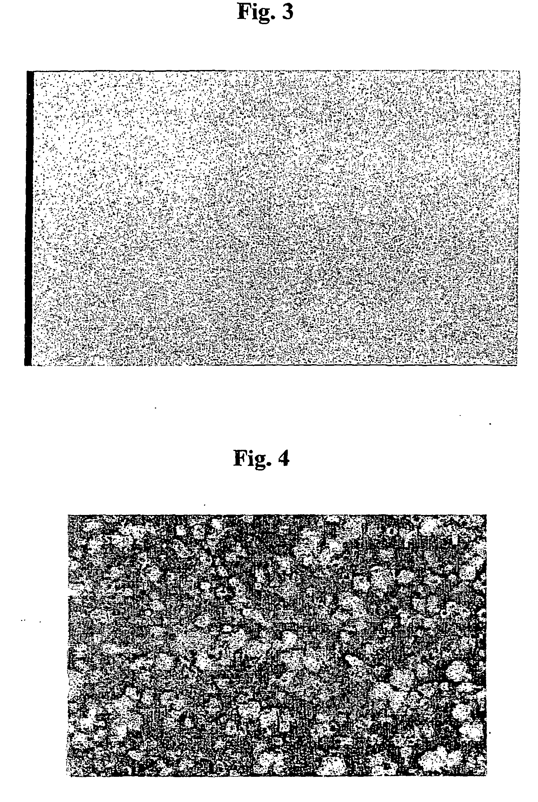

Figur 3 zeigt die Aufnahme einer Standardspinnlösung, welche 10 Gew.% (bezogen auf Zellstoff) eines Chitosoniumpolymers gemäß Beispiel 1 enthält. Es sind kleine gelartige Teilchen des Chitosoniumpolymers sichtbar. Solche Teilchen werden für die Zwecke der vorliegenden Erfindung als gelöste Teilchen angesehen.
Figur 4 zeigt die Aufnahme einer Standardspinnlösung, welche 20 Gew.% (bezogen auf Zellstoff) eines ungelösten Additives enthält. Deutlich sind die ungelösten, nicht gelartigen Teilchen des Additives zu sehen.

### Bestimmung des Wasserrückhaltevermögens (WRV) der Fasern

Das Wasserrückhaltevermögen wird als Feuchtigkeitsaufnahme einer bestimmten Menge Faser durch Quellung in Prozenten des Trockengewichtes definiert.

0,5 g Faser werden in ein Schleudergefäß gestopft. Das Schleudergefüß wird mit de-ionisiertem Wassser gefüllt, bis die Flüssigkeit unten ausläuft, und dann nochmals bis zum Rand mit de-ionisiertem Wasser ausgefüllt und 5 min. stehen gelassen. Das Schleudergefäß wird mit einem Stopfen verschlossen und zum Abschleudern in ein Zentrifugenhaltegefäß gegeben.

Anschließend wird mit einer Zentrifuge (Type Universal, Fa. Hettich) 15 min. lang bei 3000 U/min geschleudert. Die Fasern werden anschließend in ein Wägeglas gegeben und gewogen, woraus sich das Naßgewicht M1 ergibt. Danach werden die Fasern 12 h bei 60°C im Umlufttrockenschrank getrocknet und nach dem Abkühlen im Exsikkator gewogen, woraus sich das Trockengewicht M2 ergibt.

Das Wasserrückhaltevermögen WRV (%) errechnet sich aus (M1 - M2) x 100 / M2.

### Beispiel 1) Chitosan-Oligoaccharidchlorid

Für die nachfolgenden Beispiele wurde das Chitosan-Oligosaccharid Typ 2 Fa. Primex Lot. Nr. G000825-4K verwendet:
Form: Sprühgetrocknetes Pulver = Chitosan-Oligosaccharidchlorid
Chitosan-Oligosaccharid-Gehalt: 70,1 %
Feuchtigkeit 8,4 %
Asche 21,6 %
Deacetylierungsgrad 69 %
Mittleres Molekulargewicht 2,5 kDa
Polymerisationsgrad DP 12,7
N-Gehalt: 6,2 %

### Beispiel 1.1

Die Celluloselösungen (Spinnmassen) werden wie im Abschnitt "Herstellung einer Standardlösung" beschrieben hergestellt.

### Spinnmassenzusammensetzung:

| Lösungsbestandteile Gew. % | Spinnmasse 1 |
|---|---|
| NMMO | 76,5 |
| Zellstoff | 13 |
| Stabilisator | 0,1 |
| Wasser | 10,5 |
| Zugabe von Chitosan | 1 Gew. % bezogen auf Cellulose |

Zur Faserherstellung wurde für die Spinnmasse ein in der Kunststoffverarbeitung gebräuchliches Schmelzindexgerät der Fa. Davenport verwendet. Dieses Gerät besteht aus einem beheizten temperaturgeregelten Zylinder, in den die Spinnmasse eingefüllt wird. Mittels eines Kolbens, der im Originalgerät mit einem Kolben belastet wird (in der eingesetzten umgebauten Version erfolgt der Kolbenvortrieb über einen Schrittmotor) wird die Spinnmasse durch die an der Unterseite des Zylinders angebrachten Spinndüse extrudiert. Die Spinnmasse wurde bei einer Spinntemperatur von 125°C und einer Ausstoßmenge von 0,03 g/Loch/min durch eine 1-Loch/100µ Spinndüse extrudiert und nach Passieren eines Luftspaltes von 30 mm in einem Wasserbad (Temperatur 23°C, Länge 20 cm) das Filament ausgefällt. Nach 15 Minuten Auswaschen der NMMO-Restmenge wird das Filament bei 60°C im Umlufttrockenschrank getrocknet. Es ist problemlos möglich, Fasern mit einem Titer von 0,9 dtex zu spinnen.

Es wurden folgende Fasern erhalten:

| | Spinnmasse 1 |
|---|---|
| | 1 % Chitosan-Oligosaccharid-chlorid bezogen auf Cellulose |
| Titer dtex | 1,41 |
| Höchstzugkraft kond. cN/tex | 37,8 |
| Bruchdehnung kond. % | 11,1 |
| Höchstzugkraft nass cN/tex | 35,8 |
| Bruchdehnung nass % | 11,0 |

### Beispiel 1.2

In einem Rührkessel wurde aus 3433 g 78 %igem NMMO, 455 g Zellstoff, 0,05 % Stabilisator (bezogen auf Cellulose) und 1 Gew.%, 3 Gew.% bzw. 10 Gew.% Chitosan-Oligosaccharidchlorid (bezogen auf Cellulose) mittels Abdampfen der überschüssigen Wassermenge Spinnmassen der folgenden Zusammensetzungen:
76,3 % NMMO/10,5 % Wasser/ 13 % Zellstoff/0,13 % Chitosan-Oligosaccharidchlorid
76,1 % NMMO/10,4 % Wasser/12,9 % Zellstoff/0,39 % Chitosan-Oligosaccharidchlorid und
75,4 % NMMO/10,3 % Wasser/12,8 % Zellstoff/1,29 % Chitosan-Oligosaccharidchlorid
hergestellt.

Die Spinnmassen wurden jeweils mit einer Temperatur von 120°C und einer Ausstoßmenge von 0,03g/Loch/min durch eine 589 Loch/100µ Spinndüse extrudiert, in einem Luftspalt von 15 mm Länge unter Beblasung mit feuchter Luft (40 % rel. Luftfeuchtigkeit, Temperatur 26°C, 10 g Wasser/m³ Luft) verstreckt und in einem wässrigen Spinnbad die Cellulose ausgefällt.

Nach 30 min. Auswaschen der Restmenge an NMMO im Filament wurde auf 40 mm Stapellänge geschnitten und bei 60°C getrocknet. Ein Teil der geschnittenen Faser wird vor der Trocknung bei RT 15 Minuten lang mit einer Lösung, enthaltend 20 g/l Soda, Flottenverhältnis 1 : 20 behandelt, neutral gewaschen und danach bei 60 °C getrocknet.

Es wurden folgende Fasern erhalten:

| | Spinnmasse 2 | Spinnmasse 3 | Spinnmasse 4 |
|---|---|---|---|
| | 1% Chitosan-Oligosaccharid bezogen auf Cellulose | 3 % Chitosan-Oligosaccharid bezogen auf Cellulose | 10 % Chitosan-Oligosaccharid bezogen auf Cellulose |
| Titer dtex | 1,61 | 1,7 | 1,65 |
| Höchstzugkraft kond. cN/tex | 38,8 | 38,4 | 34,4 |
| Bruchdehnung kond. % | 11,9 | 10,6 | 9,5 |
| Höchstzugkraft nass cN/tex | 34,2 | 34 | 28,2 |
| Bruchdehnung nass % | 15,8 | 14,4 | 12,1 |
| BISFA Nassmodul | 10,4 | 11,9 | 11,1 |
| Schlingenfestigkeit cN/tex | 22,2 | 21 | 15 |
| Schlingendehnung % | 5 | 5 | 4 |
| N-Gehalt % | 0,06 | 0,17 | 0,54 |
| WRV(%) ohne Sodabehandlung | 61 | 66 | 67 |

Die Fasern weisen verglichen mit der Standard-Lyocell Faser eine wesentlich erhöhte Anfärbbarkeit auf, wie im Folgenden gezeigt wird:

### Anfärbetest:

0,5 g trockene Fasern werden im Flottenverhältnis 1 : 20 mit 0,5 % (bezogen auf Cellulose) Lanaset Marine R 1 Stunde bei 80°C gefärbt, gewaschen, getrocknet und kardiert. Die Proben werden mittels Cielab Farbmessgerät gegen den Weißstandard vermessen.

| Probe | L* | a* | B* |
|---|---|---|---|
| Standard Lyocell | 75,51 | - 5,15 | -12,25 |
| 1% Chitosan bezogen auf Cellulose | 49,95 | - 1,70 | -15,48 |

Bezogen auf den Helligkeitswert L* (Weißstandard L*=100, d.h. desto niedriger L*, desto dunkler ist die Probe) zeigen die Chitosanfasern eine um 30 % erhöhte Anfärbbarkeit. Rein optisch ist dieser Unterschied mit freiem Auge schon deutlich erkennbar, die Lyocell Standardprobe ist himmelblau, die chitosaninkorporierten Fasern sind mittelblau gefärbt.

### Beispiel 2) Chitosanchlorid

Für die nachfolgenden Beispiele wurde das Chitosan Fa. Primex Lot. Nr. G 0111121-1 verwendet:
Form: Sprühgetrocknetes Pulver = Chitosanchlorid
Feuchtigkeit 12,9 %
Asche 4,44%
Deacteylierungsgrad 55,3 %
Mittleres Molekulargewicht 3533 kDa
N-Gehalt: 6,02%

### Beispiel 2.1

Die Spinnmassen werden wie im Abschnitt "Herstellung einer Standardlösung" beschrieben hergestellt.

Spinnmassezusammensetzung (Gew. %): 76,5 % NMMO, 13 % Zellstoff, 0,1 % Stabilisator, 1 % Chitosanchlorid bezogen auf Cellulose, 10,5 % Wasser.

Die Faserherstellung erfolgte gemäß Beispiel 1.1.

Es wurden folgende Fasern erhalten:

| | Spinnmasse 5 | Spinnmasse 6 |
|---|---|---|
| | 1 % Chitosanchlorid | 5 % Chitosanchlorid |
| Titer dtex | 1,28 | 1,25 |
| Höchstzugkraft kond. cN/tex | 40,8 | 36,7 |
| Bruchdehnung kond. %. | 10,5 | 9,4 |

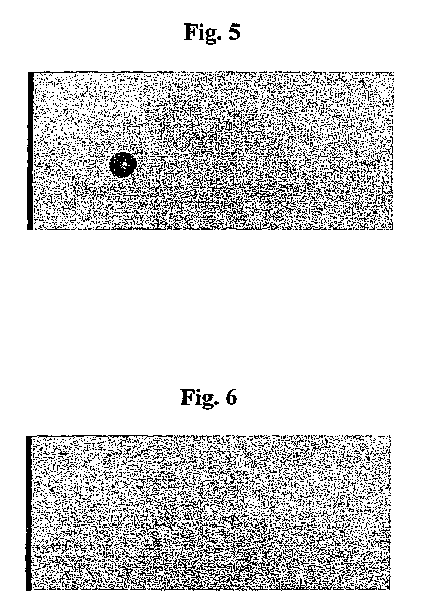

Figur 5 zeigt die mikroskopische Aufnahme der Spinnmasse 6. Es sind keine ungelösten Teilchen festzustellen.

### Beispiel 2.2

Wie in Beispiel 1.2 beschrieben, wurden Lyocellfasern mit 2 % Chitosanchlorid bezogen auf Cellulose hergestellt:

### Beispiel 2.2

| | Spinnmasse 7 |
|---|---|
| | 2 % Chitosanchlorid bezogen auf Cellulose |
| Titer dtex | 1,51 |
| Höchstzugkraft kond. cN/Tex | 38,7 |
| Bruchdehnung kond. % | 12,6 |
| Höchstzugkraft nass cN/tex | 35,0 |
| Bruchdehnung nass % | 16,4 |
| BISFA Nassmodul | 10,9 |
| Schlingenfestigkeit cN/tex | 21,2 |
| Schlingendehnung % | 5,1 |
| N-Gehalt % | 0,12 |
| WRV (%) | 69 |

### Beispiel 3 - Chitosanchlorid

Für das nachfolgende Beispiel wurde das Chitosan-Oligomer der Fa. Primex Lot. Nr. G020418-1K verwendet:
Form: Sprühgetrocknetes Pulver = Chitosanchlorid
Feuchtigkeit 8,3 %
Asche 6 %
Deacetylierungsgrad 40 %
Mittleres Molekulargewicht 1,133 kDa
Polymerisationsgrad DP 12,7
N-Gehalt: 6,46%

Wie in Beispiel 1.1 beschrieben, wurden Lyocell-Fasern mit 5 Gew.% Chitosanchlorid bezogen auf Cellulose hergestellt:

| | Spinnmasse 8 |
|---|---|
| | 5 % Chitosanchlorid bezogen auf Cellulose |
| Titer dtex | 1,31 |
| Höchstzugkraft kond. CN/tex | 38,3 |
| Bruchdehnung kond % | 11,6 |

Figur 6 zeigt die mikroskopische Aufnahme der Spinnmasse 8. Es sind keine ungelösten Teilchen festzustellen.

Von allen hergestellten chitosaninkorporierten Lyocell Fasern wurden Fluoreszenzmikroskopaufnahmen gemacht: Das in der Faser inkorporierte Chitosan kann dabei bei allen Proben sichtbar gemacht werden.

### Methode

0,05 g Faserprobe werden mit 1 g einer Lösung von Fluorescein-Isothiocynat, die wie folgt hergestellt wird: Eine Stammlösung von 10 mg Fluorescein-Isothiocynat in 1 ml Ethanol wird im Verhältnis 1:10000 mit einem Essigsäure/Natriumacetatpuffer verdünnt. Die Fasern werden mit dieser Lösung versetzt, 1 h behandelt, 5 mal mit de-ionisiertem Wasser und 1 mal mit Ethanol ausgewaschen, bei 60°C getrocknet und bei 40facher Vergrößerung im Fluoreszenzmikroskop (Fa. Olympus, BX 51) betrachtet. Das Chitosan ist an der grünfluoreszierenden Färbung erkennbar.

### Beispiel 4 - Behandlung der niemals getrockneten Faser

Für die nachfolgenden Beispiele wurde das Chitosan-Oligosaccharidchlorid Typ 2 Fa. Primex Lot. Nr. G000825-4K, N-Gehalt 6,183% verwendet.

Es wurden zunächst Lösungen des Chitosan-Oligosaccharidchlorides in Wasser (Gehalt an Chitosan-Oligosaccharidchlorid 1, 2 bzw. 3 Gew.%) hergestellt und durch Zugabe von 10%iger Essigsäure ein pH-Wert von 5,70 eingestellt.

10g niemals getrocknete Lyocell-Faser mit einem Titer von 1,3 dtex werden bei einem Flottenverhältnis von 1:20 5 Minuten bei Raumtemperatur mit der ChitosanOligosaccharidchloridlösung imprägniert und danach mit 1 bar abgepreßt. Zur Fixierung des Chitosans wird die Faserprobe anschließend entweder
- 5 Minuten bei 100°C gedämpft und ausgewaschen oder
- alkalibehandelt (Flottenverhältnis 1:20, 15 Minuten bei Raumtemperatur, 20 g/l Soda) und ausgewaschen oder
- gedämpft, alkalibehandelt und ausgewaschen

Die Ergebnisse der Versuche sind in der folgenden Tabelle zusammengefaßt:

| Versuch | Chitosan-Oligosaccharid-chlorid-Lösung (Gew.%) | Dämpfen (min.) | Soda (g/l) | N (%) | Chitosan in Faser (%) |
|---|---|---|---|---|---|
| Blindwert (unbehandelte Lyocell-Faser) | - | - | - | 0,019 | - |
| 4.1 | | - | - | 0,041 | 0,36 |
| 4.2 | 1 | - | 20 | 0,056 | 0,60 |
| 4.3 | 1 | 5 | - | 0,083 | 1,04 |
| 4.4 | 1 | 5 | 20 | 0,071 | 0,84 |
| 4.5 | 2 | - | - | 0,064 | 0,73 |
| 4.6 | 2 | - | 20 | 0,077 | 0,94 |
| 4.7 | 2 | 5 | - | 0,109 | 1,46 |
| 4.8 | 2 | 5 | 20 | 0,138 | 1,92 |
| 4.9 | 3 | - | - | 0,091 | 1,16 |
| 4.10 | 3 | - | 20 | 0,135 | 1,88 |
| 4.11 | 3 | 5 | - | 0,120 | 1,63 |
| 4.12 | 3 | 5 | 20 | 0,171 | 2,46 |

Einige Faserdaten der hergestellten Fasern sind in der folgenden Tabelle zusammengefaßt:

| Versuch | Titer (dtex) | Faserfestigkeit konditioniert (cN / tex) | Faserdehnung konditioniert (%) |
|---|---|---|---|
| Blindwert | 1,32 | 27,71 | 12,86 |
| 4.9 | 1,41 | 31,34 | 13,36 |
| 4.10 | 1,37 | 30,61 | 14,55 |
| 4.11 | 1,34 | 30,08 | 13,38 |
| 4.12 | 1,35 | 29,77 | 13,94 |

### Beispiel 5

Für die nachfolgenden Beispiele wurde das Chitosan-Oligomer Typ 2 Fa. Primex Lot. Nr. G020304-2K verwendet.
Form: Sprühgetrocknetes Pulver = Chitosanchlorid
Feuchtigkeit 10 %
Asche 0,72 %
Deacetylierungsgrad 77 %
Mittleres Molekulargewicht 4,06 kDa
N-Gehalt: 7,03 %

Es wurden zunächst Lösungen des Chitosan-Oligosaccharidchlorides in Wasser (3 Gew.%) hergestellt. Der pH-Wert der Lösungen betrug 4,6.

10 g niemals getrocknete Lyocell-Faser mit einem Titer von 1,3 dtex werden bei einem Flottenverhältnis von 1:10 5 Minuten bei Raumtemperatur mit der ChitosanOligosaccharidchloridlösung imprägniert und danach mit 1 bar abgepreßt. Zur Fixierung des Chitosans wird die Faserprobe anschließend analog zu Beispiel 4 entweder gedämpft oder alkalibehandelt.

Die Ergebnisse der Versuche sind in der folgenden Tabelle zusammengefaßt:

| Versuch | Chitosan-Oligosaccharid-chlorid-Lösung (Gew.%) | Dämpfen (min.) | Soda (g/l) | N (%) | Chitosan in Faser (%) |
|---|---|---|---|---|---|
| Blindwert (unbehandelte Lyocell-Faser) | - | - | - | 0,019 | - |
| 5.1 | 3 | 5 | - | 0,097 | 1,07 |
| 5.2 | 3 | - | 20 | 0,184 | 2,35 |

Einige Faserdaten der hergestellten Fasern sind in der folgenden Tabelle zusammengefaßt:

| Versuch | Titer (dtex) | Faserfestigkeit konditioniert (cN / tex) | Faserdehnung konditioniert (%) |
|---|---|---|---|
| Blindwert | 1,32 | 27,71 | 12,86 |
| 5.1 | 1,33 | 31,07 | 10,78 |
| 5.2 | 1,4 | 27,98 | 12,62 |

### Beispiel 6 - Behandlung mit Vernetzungsmittel

Niemals getrocknete Lyocell-Faser wurde wie in Beispiel 5 beschrieben mit einer Chitosanoligosaccharidchloridlösung imprägniert und mit 1 bar abgepreßt.

Anschließend wurden die Fasern bei einem Flottenverhältnis von 1:20 mit einer Lösung, enthaltend 20 g/l Natriumsalz des 2,4-Dichlor-6-hydroxy 1.3.5-triazins (NHDT) und 16 g/l NaOH für 3 Minuten bei Raumtemperatur imprägniert. Nach der Imprägnierung wurden die Fasern mit 3 bar abgepreßt, 5 Minuten bei 100°C mit Wasserdampf wärmebehandelt, neutral gewaschen und getrocknet.

Die mit der Chitosanoligosaccharidchloridlösung imprägnierte Faser weist ohne Behandlung mit dem Vernetzungmittel einen Gehalt von 2,15 % Chitosan in der Faser und einen Naßscheuerwert von 60 auf. Der Naßscheuerwert wird gemäß dem z.B. in der WO 99/19555 beschriebenen Verfahren ermittelt.

Die mit sowohl mit der Chitosanoligosaccharidchloridlösung als auch mit NHDT behandelte Faser weist einen Naßscheuerwert von 499 auf.

## Patentansprüche

1. Verfahren zur Herstellung cellulosischer Formkörpers nach dem Aminoxidverfahren, umfassend die Schritte:
- Ausformen einer Lösung der Cellulose in einem wässerigen tertiären Aminoxid
- Ausfällen der ausgeformten Lösung
- Waschen des so erhaltenen Formkörpers und
- Trocknen des Formkörpers,
**dadurch gekennzeichnet, daß**
der Lösung der Cellulose und/oder einem Vorläufer dieser Lösung ein Salz des Chitosans mit einer anorganischen und/oder organischen Säure zugegeben wird und/oder der Formkörper vor dem Trocknen mit einem Salz des Chitosans mit einer anorganischen und/oder organischen Säure behandelt wird, wobei das Chitosansalz in einer Standardspinnlösung im wesentlichen vollständig löslich ist.

2. Verfahren nach Anspruch 1, **dadurch gekennzeichnet, daß** das Chitosansalz der Celluloselösung bzw, dem Vorläufer der Lösung in einem Anteil von 1 Gew.% bis 50 Gew.%, bevorzugt 1 Gew.% bis 10 Gew.%, bezogen auf Cellulose zugegeben wird.

3. Verfahren nach Anspruch 2, **dadurch gekennzeichnet, daß** das Chitosansalz in Form eines Pulvers zugegeben wird.

4. Verfahren nach Anspruch 2, **dadurch gekennzeichnet, daß** das Chitosansalz in Form einer Lösung oder einer Suspension zugegeben wird.

5. Verfahren nach Anspruch 1, daß der Formkörper mit einer Lösung oder Suspension des Chitosansalz behandelt wird.

6. Verfahren nach Anspruch 5, **dadurch gekennzeichnet, daß** die Lösung oder Suspension das Chitosansalz in einem Anteil von 0,1 Gew.% bis 10 Gew.%, bevorzugt von 0,5 Gew.% bis 3 Gew.%, enthält.

7. Verfahren nach einem der Ansprüche 1 bis 6, **dadurch gekennzeichnet, daß** der Formkörper vor oder nach dem Trocknen einer Alkalibehandlung unterzogen wird.

8. Verfahren nach einem der Ansprüche 1 bis 7, **dadurch gekennzeichnet, daß** der Formkörper vor oder nach dem Trocknen einer Behandlung mit Heißdampf unterzogen wird.

9. Verfahren nach einem der Ansprüche 1 bis 8, **dadurch gekennzeichnet, daß** der Formkörper vor oder nach dem Trocknen einer Behandlung mit einem Vernetzungsmittel unterzogen wird.

10. Verfahren nach einem der Ansprüche 1 bis 9, **dadurch gekennzeichnet, daß** das Chitosansalz aus der Gruppe bestehend aus Chitosoniumacetat, Chitosoniumchlorid, Chitosoniumcitrat und Chitosoniumlactat ausgewählt ist.

11. Verfahren nach einem der Ansprüche 1 bis 10, **dadurch gekennzeichnet, daß** der cellulosische Formkörper in Form von Fasern vorliegt.

12. Lösung der Cellulose in einem tertiären Aminoxid, enthaltend ein Salz des Chitosans mit einer anorganischen und/oder organischen Säure, welches in einer Standardspinnlösung im wesentlichen vollständig löslich ist.

13. Formkörper, erhältlich durch ein Verfahren gemäß einem der Ansprüche 1 bis 11.

14. Formkörper nach Anspruch 13 in Form von Fasern.

## Claims

1. A process for the production of cellulosic moulded bodies according to the amine-oxide process, comprising the following steps:
- moulding a solution of cellulose in an aqueous tertiary amine oxide
- precipitating the moulded solution
- washing the moulded body thus obtained and
- drying the moulded body,
**characterized in that**
a salt of chitosan with an inorganic and/or organic acid is added to the solution of the cellulose and/or to a precursor of said solution and/or the moulded body is treated with a salt of chitosan with an inorganic and/or organic acid prior to drying, with the chitosan salt being essentially completely soluble in a standard dope.

2. A process according to claim 1, **characterized in that** the chitosan salt is added to the cellulose solution or to the precursor of said solution, respectively, in an amount of from 1% by weight to 50% by weight, preferably from 1% by weight to 10% by weight, based on cellulose.

3. A process according to claim 2, **characterized in that** the chitosan salt is added in the form of a powder.

4. A process according to claim 2, **characterized in that** the chitosan salt is added in the form of a solution or suspension.

5. A process according to claim 1, **characterized in that** the moulded body is treated with a solution or suspension of the chitosan salt.

6. A process according to claim 5, **characterized in that** the solution or suspension contains the chitosan salt in an amount of from 0.1 % by weight to 10% by weight, preferably from 0.5% by weight to 3% by weight.

7. A process according to any of claims 1 to 6, **characterized in that** the moulded body is subjected to an alkali treatment prior to or after drying.

8. A process according to any of claims 1 to 7, **characterized in that** the moulded body is subjected to a treatment with superheated steam prior to or after drying.

9. A process according to any of claims 1 to 8, **characterized in that** the moulded body is subjected to a treatment with a cross-linking agent prior to or after drying.

10. A process according to any of claims 1 to 9, **characterized in that** the chitosan salt is selected from the group consisting of chitosonium acetate, chitosonium chloride, chitosonium citrate and chitosonium lactate.

11. A process according to any of claims 1 to 10, **characterized in that** the cellulosic moulded body is provided in the form of fibres.

12. A solution of cellulose in a tertiary amine oxide, containing a salt of chitosan with an inorganic and/or organic acid, which salt is essentially completely soluble in a standard dope.

13. A moulded body obtainable by a process according to any of claims 1 to 11.

14. A moulded body according to claim 13 in the form of fibres.

## Revendications

1. Procédé de préparation de corps moulés cellulosiques selon le procédé à oxyde d'amine, comprenant les étapes:
- formation d'une solution de la cellulose dans un oxyde d'amine tertiaire aqueux
- précipitation de la solution formée
- lavage du corps moulé ainsi obtenu et
- séchage du corps moulé,
**caractérisé en ce que**
un sel du chitosan avec un acide inorganique ou organique est ajouté à la solution de la cellulose et/ou d'un précurseur de cette solution, et/ou le corps moulé est traité avant le séchage par un sel du chitosan avec un acide inorganique ou organique, le sel de chitosan étant essentiellement complètement soluble dans une solution de filage standard.

2. Procédé selon la revendication 1, **caractérisé en ce que** le sel de chitosan est ajouté à la solution de cellulose ou au précurseur en une proportion de 1% en poids à 50% en poids, de préférence de 1% en poids à 10% en poids par rapport à la cellulose.

3. Procédé selon la revendication 2, **caractérisé en ce que** le sel de chitosan est ajouté sous forme d'une poudre.

4. Procédé selon la revendication 2, **caractérisé en ce que** le sel de chitosan est ajouté sous forme d'une solution ou d'une suspension.

5. Procédé selon la revendication 1, en ce que le corps moulé est traité par une solution ou suspension du sel de chitosan.

6. Procédé selon la revendication 5, **caractérisé en ce que** la solution ou suspension contient le sel de chitosan en une proportion de 0,1% en poids à 10% en poids, de préférence de 0,5% en poids à 3% en poids.

7. Procédé selon l'une quelconque des revendications 1 à 6, **caractérisé en ce que** le corps moulé est soumis à un traitement par un alcali avant ou après le séchage.

8. Procédé selon l'une quelconque des revendications 1 à 7, **caractérisé en ce que** le corps moulé est soumis à un traitement par de la vapeur surchauffée avant ou après le séchage.

9. Procédé selon l'une quelconque des revendications 1 à 8, **caractérisé en ce que** le corps moulé est soumis à un traitement par un agent de réticulation avant ou après le séchage.

10. Procédé selon l'une quelconque des revendications 1 à 9, **caractérisé en ce que** le sel de chitosan est choisi dans le groupe formé par l'acétate de chitosonium, le chlorure de chitosonium, le citrate de chitosonium et le lactate de chitosonium.

11. Procédé selon l'une quelconque des revendications 1 à 10, **caractérisé en ce que** le corps moulé cellulosique se présente sous la forme de fibres.

12. Solution de cellulose dans un oxyde d'amine tertiaire, contenant un sel du chitosan avec un acide inorganique ou organique qui est essentiellement complètement soluble dans une solution de filage standard.

13. Corps moulé, que l'on peut obtenir à l'aide d'un procédé selon l'une quelconque des revendications 1 à 11.

14. Corps moulé selon la revendication 13, sous forme de fibres.
